# EUROPEAN PATENT SPECIFICATION

(11) **EP 2 414 964 B1**
(45) Date of publication and mention of the grant of the patent: **09.09.2015**
(21) Application number: 10711919.0
(22) Date of filing: 25.03.2010
(51) Int. Cl.: G06F 17/30

(54) **ELECTRONIC RESOURCE STORAGE SYSTEM**
SPEICHERSYSTEM FÜR ELEKTRONISCHE RESSOURCEN
SYSTEME DE STOCKAGE DE RESSOURCES ELECTRONIQUES

(30) Priority: 31.03.2009 GB 0905562
(43) Date of publication of application: 08.02.2012
(73) Proprietor: British Telecommunications Public Limited Company, London EC1A 7AJ (GB)
(72) Inventor: GHANEA-HERCOCK, Robert, Alan, Oxford OX2 9PJ (GB)
(74) Representative: Nash, Roger William
(86) International application number: PCT/GB2010/000568
(87) International publication number: WO 2010/112817

(56) References cited:
- WO-A1-2004/015950
- WO-A1-2005/114959
- WO-A2-01/46843
- ZEINALIPOUR-YAZTI D ET AL: "Exploiting locality for scalable information retrieval in peer-to-peer networks" INFORMATION SYSTEMS, PERGAMON PRESS, OXFORD, GB LNKD- DOI:10.1016/J.IS.2004.03.001, vol. 30, no. 4, 1 June 2005 (2005-06-01), pages 277-298, XP004729205 ISSN: 0306-4379

## Description

The present invention relates to a method of operating an electronic resource storage system. It has particular utility in relation to peer-to-peer networks.

The dominant electronic information retrieval system in the world today is the World Wide Web. The largely unstructured nature of the Web means that the primary method of identifying a web-page containing the information which a user requires is to use a search engine. Search engines normally generate full-text indices which can be used to quickly identify web-pages which contain all the words included in the user's search query. Page-ranking algorithms are then used to present the most relevant of those web-pages to the user. Some search engines, for example clusty.com, cluster the results.

A number of companies specialise in software which introduces structure into a mass of unstructured documents by categorizing those documents on the basis of keywords extracted from those documents. The companies in this field include Autonomy plc (www.autonomy.com), GammaSite Inc (www.gammasite.com), and Inxight Software Inc (www.inxight.com).

A customer of these companies can use the software to categorize unstructured documents, and thus expedite the retrieval of information (since the search can be limited to the category in which the customer is interested).

US 6,668,256 (Autonomy Corporation Ltd) discloses one method of automatic document categorization.

US Patent application 2003/0191828 discloses a peer-to-peer network in which the overlay links between peers (which define the topology of the overlay peer-to-peer network) are assigned strengths which are updated during the operation of the peer-to-peer network. In particular, a peer increases the strength of its connection to another peer when that other peer provides a useful response to a search query. The peer then forms direct overlay links to the n peers with which it has the strongest connections. In this way, clusters of peers with similar interests are formed. Since a peer first routes a query to its immediate neighbours, providing dynamic overlay links to other peers in this way improves search efficiency and reduces resource consumption in the peer-to-peer network.

The applicant's co-pending international application WO 2005/114959 teaches another peer-to-peer network in which each peer strengthens the overlay link to another peer in response to receiving a high-quality response to a query sent to that peer. Each peer uses probabilistic routing so that a query is more likely to be sent to a peer with which it has a relatively strong overlay link. Again, this improves search efficiency and reduces resource consumption in the peer-to-peer network.

The present inventor has realised that search efficiency can be improved still further.

According to a first aspect of the present invention, there is provided a method of operating an electronic resource storage system storing a collection of electronic resources into a plurality of sub-collections, said method of operating an electronic resource storage system storing a collection of electronic resources into a plurality of sub-collections, said method comprising:
assigning similarity measures between the sub-collections;
automatically generating a search query associated with a sub-collection by deriving said search query from the contents of said sub-collection;
applying said search query associated with one sub-collection to one or more of the other sub-collections;
adjusting the similarity measures between the sub-collections by increasing the similarity measure between the sub-collection with which a query is associated and any sub-collection which provides a resource which matches the search query relative to a similarity measure between the sub-collection on which a query is based and sub-collections which do not provide a resource which matches the search query; and
storing said similarity measures.

By assigning similarity measures between the sub-collections, applying one or more search queries representative of the documents from one or more sub-collections to one or more of the other sub-collections, and increasing the similarity measure between the sub-collection from which a query is derived and any sub-collection which provides a resource which matches the search query relative to a similarity measure between the sub-collection on which a query is based and any sub-collection which does not provide a resource which matches the search query, and storing said similarity measures, subsequent selection and use of electronic resources in said collection can be improved.

The data structure thus created enables a number of technical benefits. Firstly, the presentation of search query results can be improved. Secondly, an ontology or a taxonomy of the sub-collections can be automatically created using techniques like those disclosed in the applicant's co-pending international application WO2009/030902. Thirdly, the sub-collections and the degree of similarity between the different sub-collections can be presented on a graphical display to assist a user in understanding relationships between different sub-collections. Fourthly, the data structure enables different feeds (e.g. different sensor feeds) to be merged together even if the underlying data descriptions are fixed and specific to each sensor type. For example, a user may wish to merge data streams from a video sensor feed, and a text-based intelligence news feed. The data structure provides measures of semantic similarity which can be used in merging the two feeds despite the two feeds using quite different meta level tags or descriptors.

In preferred embodiments, the method further comprises receiving a further search query associated with a sub-collection and preferentially applying said search query to sub-collections having a relatively high similarity to the sub-collection with which said further search query is associated.

In this way, the speed and accuracy of responses to a user's search queries is improved.

The search query associated with a sub-collection of documents can be generated automatically to include distinctive terms found in the sub-collection of documents.

According to a second aspect of the present invention, there is provided a computer network comprising a plurality of interconnected computers, each computer interconnected in use to a plurality of other computers, said computer comprising:
i) an electronic resource store;
ii) means for providing resources in said electronic resource store to other of said interconnected computers;
iii) a resource sub-collection store; and
iv) a degrees of similarity store storing measures indicative of the degrees of similarity between the contents of said resource sub-collection store and the contents of resource sub-collection stores on other of said computers;
said computer being arranged in operation to:
a) occasionally generate a search query representative of the resources in said resource sub-collection store;
b) forward said search query to one or more of said other computers;
c) receive responses to said search query from one or more of said other computers; and
d) update the degrees of similarity between sub-collections by adjusting the similarity measures between the sub-collections by increasing the similarity measure between the sub-collection stored in said resource sub-collection store and the resource sub-collection store on one or more of said other computers in which a resource matching said search query is stored relative to a similarity measure between the sub-collection stored in said sub-collection store and sub-collections stored on one or more of said other computers which do not store a resource which matches the search query.

In some embodiments the step of receiving or generating a search query comprises periodically or occasionally automatically generating a search query based on popular terms from search requests entered by the computer's user.

As the user's context of interest changes, the user's search queries will change and the degrees of similarity of the other sub-collections to the sub-collection on the user's computer will adapt to increase the degrees of similarity between the sub-collection on the user's computer and those sub-collections on other computers which include documents now relevant to the user's context of interest.

The stored electronic resource may be electronic documents or software program components (e.g. web services).

There now follows a description, given by way of example only, of specific embodiments of the present invention, which refers to the accompanying drawings in which:
Figure 1 shows a peer-to-peer document storage and retrieval network overlaid on the Internet;
Figure 2 is a schematic illustration of components of a computer in the peer-to-peer computer network;
Figure 3 shows an example of a connection weights data structure stored in nodes of the peer-to-peer network;
Figure 4 is a flow-chart showing the steps carried out by each peer computer on receiving a search query from a user;
Figure 5 is a flow-chart showing the periodic automatic generation and sending of a search query carried out by each peer computer in the network;
Figure 6 is a flow-chart showing steps carried out by each peer on receiving a search query from another peer;
Figures 7A and 7B are flow-charts showing how each peer updates its stored connection weights.

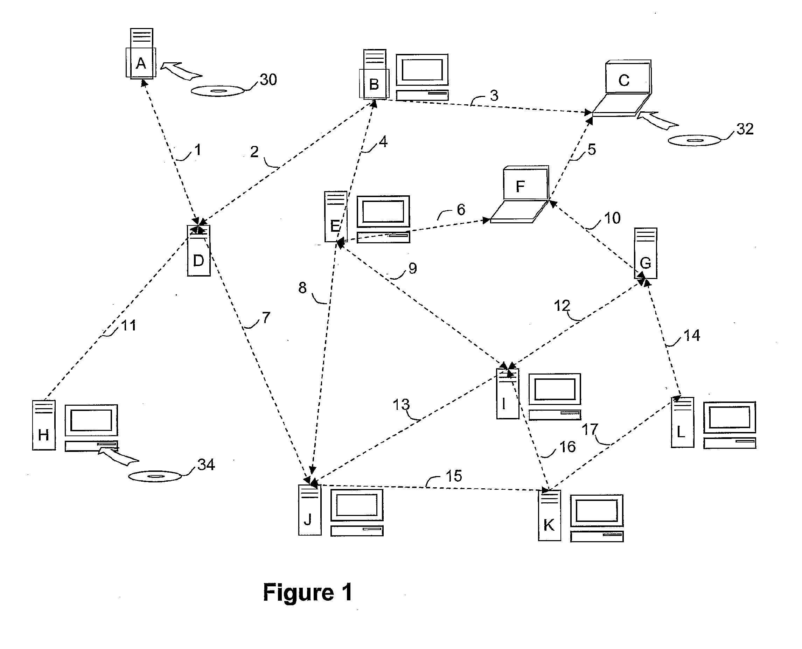

A computer network (Figure 1) comprises a plurality of devices (A - L) which are fully interconnected to one another since each of the devices is connected to the global Internet. The dotted lines show predominant virtual links (1-17) between the devices - an explanation of which will be given below. The devices are of different types including desktop computers (B, E, H, I, J, K, and L), laptop computers (C and F), and server computers (A, D and G). Each of these computers is supplied with conventional hardware and operating system software which enables them to run application programs and communicate with each other via the Internet.

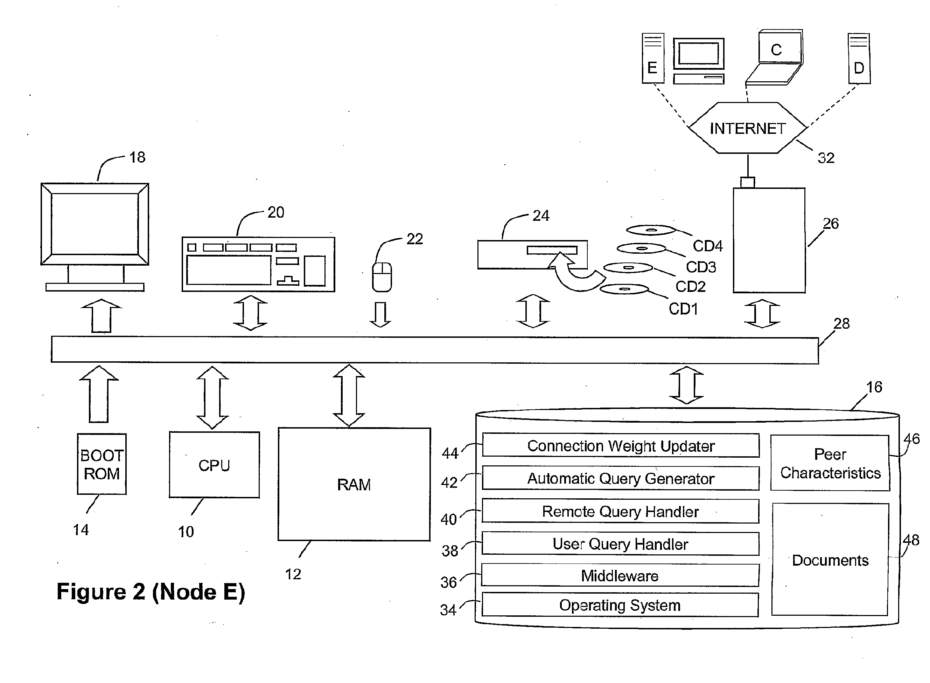

Figure 2 shows, by way of example, the configuration of peer computer E in the peer-to-peer network (Figure 1). The peer computer E comprises well-known hardware components connected together in a conventional manner. The well-known hardware components comprise a central processing unit 10, random access memory 12, read-only memory 14, a hard disk 16 and input/output devices 18,20,22,24, and 26. The hardware components are interconnected via one or more data and address buses 28. The input/output devices, comprise a monitor 18, a keyboard 20, a mouse 22, a CD ROM drive 24 and a network card 26. The network card is connected to each of the other peer computers by the public Internet 32.

Also installed on peer computer E is operating system software 34 and middleware 36 which enables peer computer E to provide services to other computers on the network and to find and execute services on other computers in the network. An example of suitable middleware is NEXUS middleware as described in the paper 'NEXUS - resilient intelligent middleware' by Nima Kaveh and Robert Ghanea-Hercock published in BT Technology Journal, vol. 22 no. 3, July 2004 pp209-215

Alternatively, commercially available middleware such as IBM's WebSphere or BEA's WebLogic could be used.

Further software installed on the hard disk 16 of peer computer E comprises user query module 38, remote query handler 40, automatic query generator 42 and connection weight updater 44. Data stored on hard disk 16 includes a collection of documents 48 (in this example documents marked-up in accordance with an XML schema) and a peer characteristics file 46 which stores data which defines the strength of connections between the computer E and the other nodes in the peer-to-peer network, and a record of the time elapsed since a query response was received from each peer computer.

As will, be understood by those skilled in the art, the operating system, software 34 will be loaded into the RAM 12 when the computer is started, the operating system software 34 subsequently loading the other software (36 - 44) and data files (46, 48) into the RAM 12 as and when they are required to be executed by the CPU 10.

Each of the other peer computers is provided with similar hardware and software to that described above in relation to node E.

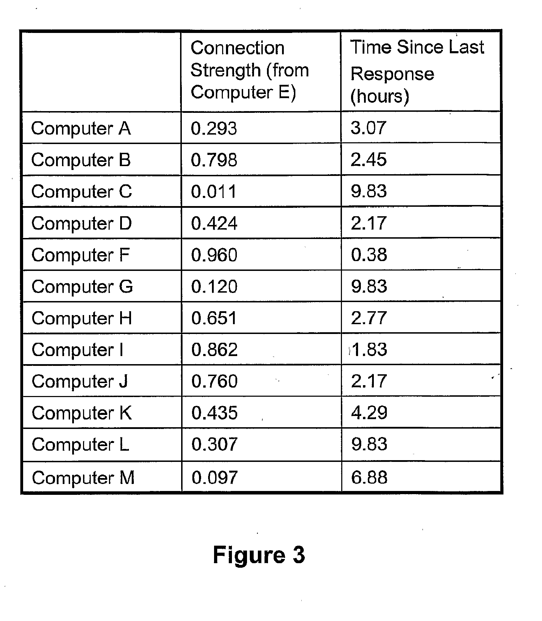

A data structure 46 created and updated by the connection weight updater software 44 is illustrated in Figure 3. Whilst the example shown gives the specific values at a given instant for computer E, it will be understood that each of the other computers (A-D,F-L) stores a similar data structure. The data structure 46 includes (central column) a connection weight between zero and one for the connection of node E to each of the other computers (A-D,F-L) and (right-hand column) an indication of the time elapsed since a query response was received from each of the other computers (A-D, F-L). The dotted links (1-17) seen in Figure 1 are the links which either or both computers (as indicated by single or double arrows) currently rate as having a connection weight greater than 0.75.

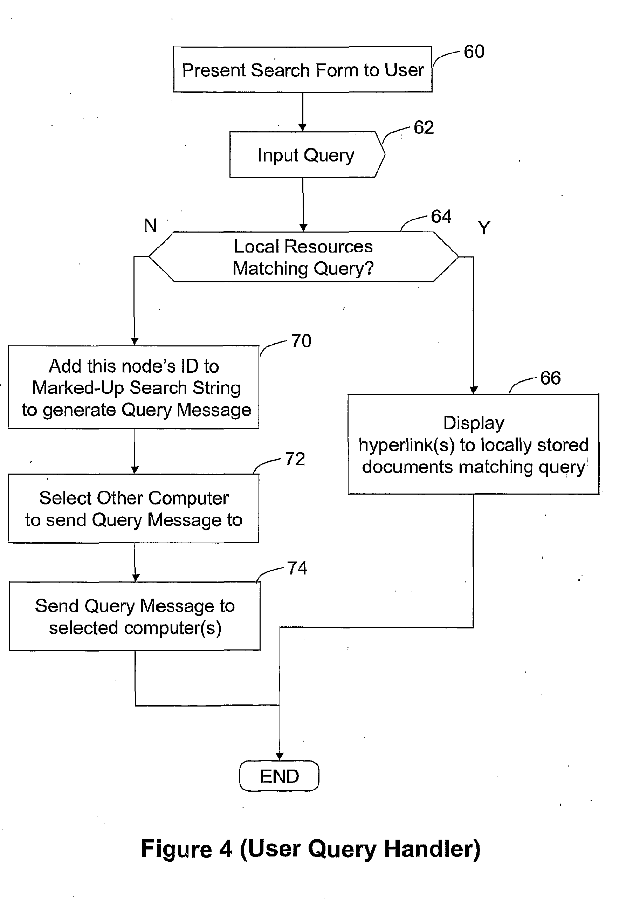

Figure 4 illustrates the processing carried out by each computer (A-L) in order to provide its user with an interface enabling its user to search for documents relevant to a user's query stored in the computer network (Figure 1). The user is first presented (step 60) with a form on the computer's display 18 allowing the user to enter terms into search fields displayed on the form using the keyboard 20. Those search fields correspond to the at least some of the tags included in the mark-up of the documents 48 stored on each computer (A-L). On the user activating a 'Search' button included on the form using the mouse 22, the query is passed (step 62) to the user query handler. The user query handler then finds (step 64) whether any of the documents 48 stored on this computer's hard disk 16 match the user's query. If one or more documents matching the user's query are found, then the computer displays (step 66) a results page to the user including a hyperlink to the retrieved document. If, on the other hand, no documents 48 stored on the hard disk 16 match the user's query, then the computer generates (step 70) a message including the user's search string (marked up to reflect which terms were entered into which fields on the form), a Time-to-Live value and an indication that the computer is the origin of the Query Message. The Time to Live value restricts the number of computers through which a Query Message can pass as will be explained below. The computer (computer E in this particular example) then selects another computer (A-L) to send the Query Message to. That selection may favour computers having a high degree of connectivity. This is based on an assumption that such nodes will have the best probability of routing the message to the widest set of peer nodes and hence increase the possibility of a search response. The selection may instead be biased in such a way that the probability that each of the other computers is selected is in proportion to the stored connection weight (Figure 3) from computer E to that other computer. In alternative embodiments, the selection might just of the most strongly connected other computer (computer F in this example) or might be the most n strongly connected other computers. The Marked-Up Query Message is then sent to the selected computer(s). The user query handler process then ends (step 68).

As will be explained below, the communication of Query Messages within the computer network (Figure 1) drives the updating of the connection weights (Figure 3) stored in the computer which originates the Query Message. In order to ensure that those connection weights are updated sufficiently frequently to track changes in the documents 46 stored on the hard disks 16 of the computers (A-L), each computer (A-L) periodically runs automatic query generation software 42 in addition to occasionally relaying user queries as explained above in relation to Figure 4.

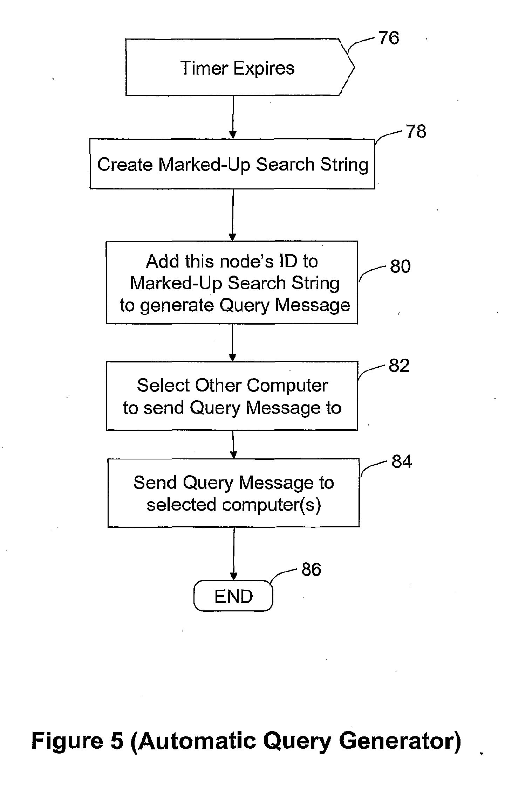

Figure 5 shows the operation of the automatic query generation software 42. Execution of that software is triggered by the expiration of a timer (step 76). In the present embodiment the timer is set to go off once per hour, but in other embodiments where, for example, computers are leaving and joining the network within most hours, or a new document is being saved on one of the hard disks 16 every few minutes, then the timer may be set to go off more frequently, for example, every five minutes. In alternative embodiments, the execution of the automatic query generation software 42 might be triggered every time the user saves a document onto the hard disk 16.

Once triggered, the automatic query generation software 42 automatically generates (step 78) a marked-up search string similar in format to that generated in response to the user inputting a search query via a displayed form. The automatically generated query contains N tags. These tags may be randomly selected from a known corpus of tags of interest to the user / application, or may be generated from locally-stored results of prior searches.

Having automatically generated a marked-up Search String, the automatic query generator then adds (step 80) an indication that is the origin of the automatic query to the Marked-Up Search String and a Time-to-Live value, and then selects (step 82) one or more other computers to send the Query Message to, and sends (step 84) the Query Message to the selected computer(s). The execution of the automatic query generation software 42 then ends (step 86).

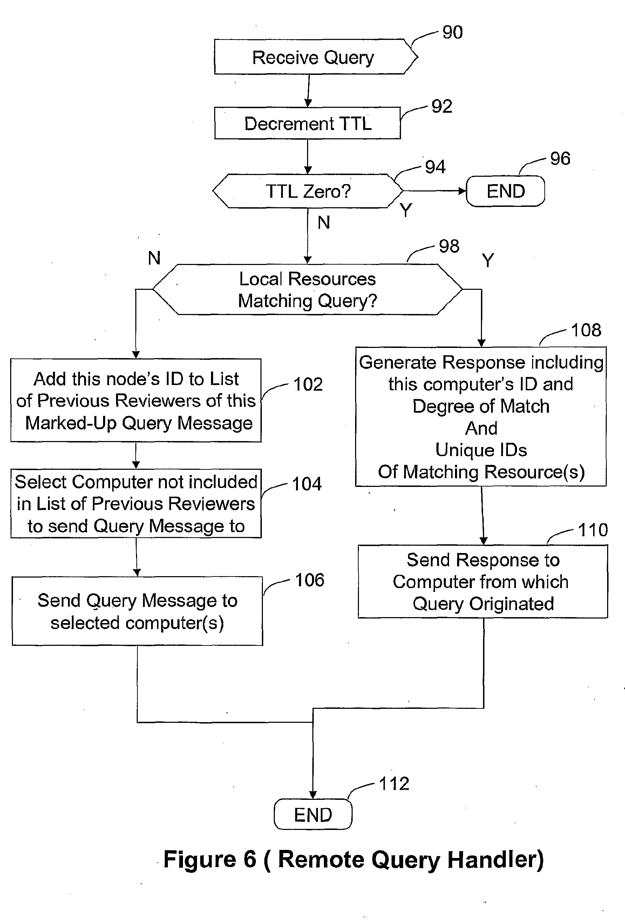

Sending a Query Message to another computer (A-L) involves making a remote call to a remote query handler method on the other computer. The process carried out by the remote query handler method 40 is illustrated in Figure 6.

The remote query handler method is triggered (step 90) by the receipt of a Query Message. On receipt of the query message, the computer receiving the message first decrements (step 92) the Time-to-Live value by one. A test (step 94) is then carried out to find whether the Time-to-Live value is thereby reduced to zero. If the time-to-live value is reduced to zero, then the query handler method ends (step 96). If, however the time-to-live value remains one or more, then the computer searches (step 98) the documents 48 stored on its hard disk 16 to find whether any of those documents match the query.

If documents are found which do match the query, then the computer generates (step 108) a response message including its identification, a link to the matching document(s) - which is sufficient to enable the originator of the query to download the document - and a measure indicative of the degree to which the document matches the query. In this embodiment, that degree of matching might simply be the number of tag values present in the search query which match the corresponding tag values found in the document. The computer then sends (step 110) the response message to the computer which originated the query.

If, on the other hand, no matching documents are found in the search (step 98), then the computer adds (step 102) its identification to the list of previous reviewers of the query message (included as part of the message and added to as the query message is processed by each computer), and then selects (step 104) a computer not included in the list of previous reviewers to send the message to. In some embodiments, this selections is random. In other embodiments, this selection can be biased to decrease the probability of the message being sent to computer(s) to which this computer has strong connections (on the assumption that if this computer does not have relevant documents then it is likely that computer storing documents similar to the documents 46 stored on this computer will also not have relevant documents). Having selected one or more computer(s) to forward the query message to, the query message is sent (step 106) to the selected computers.

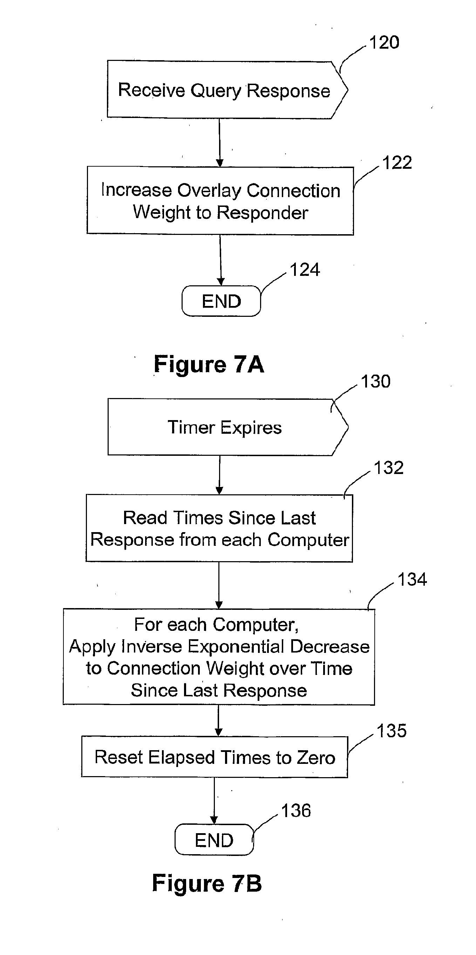

Figures 7A and 7B illustrate connection weight update software 44 executed by each computer. A connection weight increase routine (Figure 7A) is executed on receiving (step 120) a query response from another computer. In that event, the connection weights are increased (step 124) by adding an amount to the connection weight with the responding computer. The amount added is proportional to the degree of matching measure included with the query response. The constant of proportionality controls how sensitive the connection weights are to each query response.

In order to counter the rise in connection weights generally, the connection weight update software 44 also includes a connection weight decrease routine (Figure 7B). This is triggered by a timer going off. In this particular example, the timer is set to go off every 12 hours, but it may instead go off more frequently than this, for example once per hour. When the timer expires (step 130), the time elapsed since receiving a query response from each of the other computers is read from the peer characteristics table (Figure 3). Thereafter, the connection weight from the computer to each of the other computers is decreased (step 134) in accordance with an inverse exponential decay taken to persist for the time elapsed since receiving a query response from the computer concerned. Thereafter, the elapsed times (Figure 3, right-hand column) are re-set (step 135) to zero, and the connection weight decrease routine ends (step 136).

In other embodiments, more sophisticated connection weight update procedures might be used. For example, the connection weight update routines disclosed in the applicant's international patent application WO 2005/114959 might be used. In particular, connections to peers whose weight falls below a threshold value might be ,removed altogether. This would improve the scalability of the present embodiment to larger networks.

It will be seen how the above embodiment generates a set of connection weights between each computer and the other computers in the network which indicate the usefulness of each of the other computers in responding to user search queries. It will also be seen how directing search queries between computers in the peer-to-peer computer network in accordance with those connection weights expedites the retrieval of documents relevant to a user's query, and how the connection weights can adapt to the introduction, modification or deletion of documents stored in peer computers, or indeed to the introduction or removal of peer computers from the network.

It will further be seen how the connection weights might be passed to a graphics program for visualising clusters in order to provide the user with a display image which shows relationships between the information stored on different computers which relationships might otherwise be difficult for the user to discern.

Furthermore, it will be seen how the connection weights might be passed to a clustering algorithm to automatically generate a taxonomy of the peer's document stores. Techniques for doing this are disclosed in the applicant's co-pending international application WO2009/030902.

It will also be seen how, in addition to using user queries as a trigger to update connection weights in the peer-to-peer network, the present invention also occasionally automatically generates search queries representative of the documents stored at a node. In this way, connections between nodes are formed which are representative of the similarity between the collections of documents at respective nodes. This leads to a connection weight between any two nodes in the peer-to-peer network representing the degree of similarity between the collections of documents stored at the two nodes, rather than the degree of similarity between what a user of one node seeks and what the other node is able to provide. Generating connection weights which better reflect the similarity between document collections stored at respective nodes further improves the search efficiency in a peer-to-peer network and thereby reduces its resource consumption.

In summary of the above disclosure, a peer-to-peer network providing a distributed document store is disclosed. A problem with known distributed document stores is that search engines are unable to respond quickly to changes in the stored documents or the addition or removal of peers. In the described embodiment, the peers in the network send search queries to one another and each keeps a record of which peers most frequently respond to those queries, and the quality of the responses. The peers each maintain a data structure 46 including connection weights to each of the other peers which depend on that record. By then forwarding search queries to peers selected on the basis of the connection weights, rapid retrieval of relevant documents is enabled. Search queries are generated automatically by peers as well as being generated by users. Because the generation of search queries (either automatically or by users) updates the connection weights, the peer-to-peer network is able to rapidly adapted to changes in the documents stored in the peer-to-peer network. In addition to document storage and retrieval the invention finds application in distributed applications which dynamically select a Web Service to perform a function at run-time.

## Claims

1. A method of operating a computer interconnected to a plurality of other computers, each computer storing a sub-collection of electronic resources said method comprising:
assigning similarity measures between the sub-collections;
automatically generating a search query associated with a sub-collection by deriving said search query from the contents of said sub-collection;
applying said search query associated with one sub-collection to one or more of the other sub-collections;
adjusting the similarity measures between the sub-collections by increasing the similarity measure between the sub-collection with which said query is associated and any sub-collection which provides a resource which matches the search query relative to a similarity measure between the sub-collection on which said query is based and sub-collections which do not provide a resource which matches the search query; and
storing said similarity measures.

2. A method according to claim 1 further comprising receiving a further search query associated with a sub-collection and preferentially applying said search query to sub-collections having a relatively high similarity to the sub-collection with which said further search query is associated.

3. A method according to claim 1 wherein said electronic resources are electronic documents.

4. A method according to claim 1 wherein said electronic resources are remotely executable computer programs or program components.

5. A computer interconnected in use to a plurality of other computers, said computer comprising:
i) an electronic resource store;
ii) means for providing resources in said electronic resource store to other of said interconnected computers;
iii) a resource sub-collection store; and
iv) a degrees of similarity store storing measures indicative of the degrees of similarity between the contents of said resource sub-collection store and the contents of resource sub-collection stores on other of said computers;
said computer being arranged in operation to:
a) automatically generate a search query representative of the resources in said resource sub-collection store;
b) forward said search query to one or more of said other computers;
c) receive responses to said search query from one or more of said other computers; and
d) update the degrees of similarity between sub-collections by adjusting the similarity measures between the sub-collections by increasing the similarity measure between the sub-collection stored in said resource sub-collection store and the resource sub-collection store on one or more of said other computers in which a resource matching said search query is stored relative to a similarity measure between the sub-collection stored in said sub-collection store and sub-collections stored on one or more of said other computers which do not store a resource which matches the search query.

6. A computer according to claim 5 further arranged in operation to periodically or occasionally automatically generate said associated search query by storing search requests entered by the computer's user and including terms frequently occurring in user's search requests in said automatically generated query.

## Patentansprüche

1. Verfahren zum Betreiben eines Computers, der mit einer Vielzahl von anderen Computern verbunden ist, wobei jeder Computer eine Unter-Sammlung von elektronischen Ressourcen speichert,
wobei das Verfahren umfasst:
Zuordnen von Ähnlichkeits-Maßen zwischen den UnterSammlungen,
automatisches Erzeugen einer Suchanfrage, die mit einer Unter-Sammlung verknüpft ist, durch Ableiten der Suchanfrage aus den Inhalten der Unter-Sammlung,
Anwenden der mit einer Unter-Sammlung verknüpften Suchanfrage auf eine der anderen Unter-Sammlungen oder mehrere der anderen Unter-Sammlungen,
Anpassen der Ähnlichkeits-Maße zwischen den Unter-Sammlungen durch Vergrößern des Ähnlichkeits-Maßes zwischen der Unter-Sammlung, mit der die Suchanfrage verknüpft ist, und einer Unter-Sammlung, die eine Ressource bereitstellt, welche mit der Suchanfrage bezüglich eines Ähnlichkeits-Maßes zwischen der Unter-Sammlung, auf welcher die Suchanfrage beruht, und UnterSammlungen, die keine mit der Suchanfrage zusammenpassende Ressource bereitstellen, zusammenpasst,
und
Speichern der Ähnlichkeits-Maße.

2. Verfahren nach Anspruch 1, das ferner umfasst:
Empfangen einer weiteren Suchanfrage, die mit einer Unter-Sammlung verknüpft ist, und vorzugsweise Anwenden dieser Suchanfrage auf Unter-Sammlungen, die eine relativ große Ähnlichkeit mit der Untersammlung aufweisen, mit der die weitere Suchanfrage verknüpft ist.

3. Verfahren nach Anspruch 1, bei dem die elektronischen Ressourcen elektronische Dokumente sind.

4. Verfahren nach Anspruch 1, bei dem die elektronischen Ressourcen an einem entfernt befindlichen Ort ausführbare Computerprogramme oder Computerprogramm-Komponenten sind.

5. Computer, der im Einsatz mit einer Vielzahl von anderen Computern verbunden ist, wobei der Computer umfasst:
i) einen elektronischen Ressourcen-Speicher,
ii) eine Einrichtung zur Bereitstellung von Ressourcen in dem elektronischen Ressourcen-Speicher für andere der verbundenen Computer,
iii) einen Speicher für Ressourcen-Untersammlungen und
iv) einen Speicher für Ähnlichkeitsgrade, der Maße speichert, die den Grad der Ähnlichkeit zwischen den Inhalten des Speichers für Ressourcen-Untersammlungen und den Inhalten von Speichern für Ressourcen-Untersammlungen auf anderen dieser Computer anzeigen,
wobei der Computer so ausgebildet ist, dass er im Betrieb
a) automatisch eine Suchanfrage erzeugt, die für die Ressourcen in dem Speicher für Ressourcen-Untersammlungen repräsentativ ist,
b) die Suchanfrage an einen oder mehrere der anderen Computer übermittelt,
c) Antworten auf die Suchanfrage von einem oder mehreren der anderen Computer empfängt
und
d) die Ähnlichkeitsgrade zwischen Unter-Sammlungen aktualisiert durch Anpassen der Ähnlichkeits-Maße zwischen den Unter-Sammlungen durch Vergrößern des Ähnlichkeits-Maßes zwischen der Unter-Sammlung, die in dem Speicher für Ressourcen-Untersammlungen und dem Speicher für Ressourcen-Untersammlungen auf einem oder mehreren der anderen Computer gespeichert sind, worin eine Ressource, welche mit der Suchanfrage zusammenpasst, bezüglich eines Ähnlichkeits-Maßes zwischen der Unter-Sammlung, die in dem Speicher für Unter-Sammlungen gespeichert ist, und UnterSammlungen, die auf einem oder mehreren der anderen Computer gespeichert sind, die keine mit der Suchanfrage zusammenpassende Ressource speichern, gespeichert ist.

6. Computer nach Anspruch 5, der ferner so ausgebildet ist, dass er im Betrieb periodisch oder gelegentlich automatisch die verknüpfte Suchanfrage erzeugt durch Speichern von Suchanfragen, die durch den Benutzer des Computers eingegeben wurden und Begriffe enthalten, die bei den Suchanfragen des Benutzers häufig vorkommen, in der automatisch erzeugten Anfrage.

## Revendications

1. Procédé de mise en oeuvre d'un ordinateur interconnecté avec une pluralité d'autres ordinateurs, chaque ordinateur mémorisant un sous-ensemble de ressources électroniques, ledit procédé comprenant :
l'attribution de mesures de similarité entre les sous-ensembles ;
la génération automatique d'une interrogation de recherche associée à un sous-ensemble en déduisant ladite interrogation de recherche du contenu dudit sous-ensemble ;
l'application de ladite interrogation de recherche associée à un sous-ensemble à un ou plusieurs des autres sous-ensembles ;
l'ajustement des mesures de similarité entre les sous-ensembles en augmentant la mesure de similarité entre le sous-ensemble auquel ladite interrogation est associée et tout sous-ensemble qui fournit des ressources qui correspondent à l'interrogation de recherche relative à une mesure de similarité entre le sous-ensemble sur lequel ladite interrogation est basée et les sous-ensembles qui ne fournissent pas de ressources qui correspondent à l'interrogation de recherche ; et
la mémorisation desdites mesures de similarité.

2. Procédé selon la revendication 1 comprenant en outre la réception d'une interrogation de recherche supplémentaire associée à un sous-ensemble et de préférence l'application de ladite interrogation de recherche à des sous-ensembles ayant une similarité relativement élevée avec le sous-ensemble auquel ladite interrogation de recherche supplémentaire est associée.

3. Procédé selon la revendication 1, dans lequel lesdites ressources électroniques sont des documents électroniques.

4. Procédé selon la revendication 1, dans lequel lesdites ressources électroniques sont des programmes ou des composants de programme d'ordinateur exécutables à distance.

5. Ordinateur interconnecté en utilisation avec une pluralité d'autres ordinateurs, ledit ordinateur comprenant :
i) une mémoire de ressources électroniques ;
ii) des moyens pour fournir des ressources de ladite mémoire de ressources électroniques à un autre desdits ordinateurs interconnectés ;
iii) une mémoire de sous-ensemble de ressources ; et
iv) une mémoire de degrés de similarité mémorisant des mesures indicatives des degrés de similarité entre le contenu de ladite mémoire de sous-ensemble de ressources et le contenu des mémoires de sous-ensemble de ressources sur un autre desdits ordinateurs ;
ledit ordinateur étant agencé en fonctionnement pour :
a) générer automatiquement une interrogation de recherche représentative des ressources dans ladite mémoire de sous-ensemble de ressources ;
b) acheminer ladite interrogation de recherche vers un ou plusieurs desdits autres ordinateurs ;
c) recevoir des réponses à ladite interrogation de recherche d'un ou de plusieurs desdits autres ordinateurs ; et
d) mettre à jour les degrés de similarité entre les sous-ensembles en ajustant les mesures de similarité entre les sous-ensembles en augmentant la mesure de similarité entre le sous-ensemble mémorisé dans ladite mémoire de sous-ensemble de ressources et la mémoire de sous-ensemble de ressources sur un ou plusieurs desdits autres ordinateurs dans lesquels des ressources correspondant à ladite interrogation de recherche sont mémorisées en relation avec une mesure de similarité entre le sous-ensemble mémorisé dans ladite mémoire de sous-ensemble et les sous-ensembles mémorisés sur un ou plusieurs desdits autres ordinateurs qui ne mémorisent pas de ressources qui correspondent à l'interrogation de recherche.

6. Ordinateur selon la revendication 5 agencé en outre en fonctionnement pour générer périodiquement ou parfois automatiquement ladite interrogation de recherche associée en mémorisant les demandes de recherche entrées par l'utilisateur de l'ordinateur et comprenant des termes apparaissant fréquemment dans les demandes de recherche de l'utilisateur dans ladite interrogation générée automatiquement.
